(19) Europäisches Patentamt
European Patent Office
Office européen des brevets

(11) **EP 3 029 110 B1**

(12) **EUROPEAN PATENT SPECIFICATION**

(45) Date of publication and mention
of the grant of the patent:
**06.06.2018 Bulletin 2018/23**

(21) Application number: **14842214.0**

(22) Date of filing: **07.08.2014**

(51) Int Cl.:
*C08L 75/04* (2006.01)    *C08G 18/65* (2006.01)
*C08K 5/06* (2006.01)    *D06N 3/14* (2006.01)
*D06M 15/568* (2006.01)    *D06M 15/564* (2006.01)
*C08G 18/48* (2006.01)    *C08G 18/66* (2006.01)
*C08G 18/76* (2006.01)    *C08G 18/08* (2006.01)
*C08G 18/32* (2006.01)    *C08G 18/34* (2006.01)
*C08G 18/42* (2006.01)    *C08G 18/44* (2006.01)
*D06M 15/572* (2006.01)    *D06M 101/32* (2006.01)

(86) International application number:
**PCT/JP2014/070844**

(87) International publication number:
**WO 2015/033732 (12.03.2015 Gazette 2015/10)**

(54) **LEATHER-LIKE SHEET**

EINER LEDERARTIGEN FOLIE

FEUILLE DE TYPE CUIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.09.2013   JP 2013185015**

(43) Date of publication of application:
**08.06.2016   Bulletin 2016/23**

(73) Proprietor: **DIC Corporation
Tokyo 174-8520 (JP)**

(72) Inventor: **TETSUI Tomohiro
Takaishi-shi
Osaka 592-0001 (JP)**

(74) Representative: **Adam, Holger
Kraus & Weisert
Patentanwälte PartGmbB
Thomas-Wimmer-Ring 15
80539 München (DE)**

(56) References cited:
**CN-A- 103 044 652    JP-A- H1 025 664
JP-A- H1 112 458    JP-A- H08 246 355
JP-A- 2000 096 457    JP-A- 2000 290 879
JP-A- 2003 336 178    JP-A- 2004 043 519
JP-A- 2006 096 852**

- **DATABASE WPI Week 200446 Thomson
Scientific, London, GB; AN 2004-483048
XP002769232, -& JP 2004 143641 A (SANYO
CHEM IND LTD) 20 May 2004 (2004-05-20)**

**Description**

Technical Field

The present invention relates to an aqueous urethane resin composition that can be used for producing leather-like sheets or the like.

Background Art

Aqueous urethane resin compositions produced by dispersing a urethane resin in an aqueous medium have been widely used as a material of leather-like sheets such as artificial leather and synthetic leather, coating agents, adhesives, or the like, because the aqueous urethane resin compositions cause a smaller environmental load than the organic-solvent-based urethane resin compositions of the related art.

In general, most of the leather-like sheets are constituted by a base composed of nonwoven fabric or the like, an intermediate layer including a porous layer, and a surface coating layer, and the base is produced by impregnating a fiber base composed of nonwoven fabric or the like with an aqueous urethane resin composition and subsequently performing thermal coagulation of the urethane resin composition in order to enhance the flex resistance and feeling of the leather-like sheets.

As an aqueous urethane resin composition with which the fiber base is impregnated, for example, there has been proposed a urethane resin composition including a urethane resin, a nonionic emulsifier, and an aqueous medium, the urethane resin being produced by reacting a polyol including a polyol including a carboxyl group with an alicyclic polyisocyanate and a chain extender including an amino group (see, e.g., PTL 1, PTL 2, PTL 3).

However, this aqueous urethane resin composition is likely to become discolored with time. Furthermore, goods produced using the aqueous urethane resin composition are paper-like and do not have resilience. Thus, the improvement of the feeling of goods produced using the aqueous urethane resin composition has been needed.

Citation List

Patent Literature

PTL 1: Japanese Unexamined Patent Application Publication No. 11-335 975
PTL 2 : JP 2004- 143641 A
PTL 3 : JP 2000- 96457 A

Summary of Invention

Technical Problem

An object of the present invention is to provide an aqueous urethane resin composition with which a fiber base can be impregnated, which is capable of thermal coagulation, which does not detach from the fiber base due to water or heat in the step of coloring the impregnated base, and which is capable of forming a coating film having resistance to discoloration which may occur with time and an excellent feeling, that is, flexibility and resilience. Solution to Problem

The present invention provides an aqueous urethane resin composition including a urethane resin (A), a nonionic emulsifier (B), and an aqueous medium (C), the urethane resin (A) being produced by reacting a polyol (a1) including a polyol (a1-1) including a carboxyl group with an aromatic polyisocyanate (a2) and a chain extender (a3), the content of urea linkage in the urethane resin (A) being 0.3 mol/kg or less.

The present invention also provides a leather-like sheet produced by impregnating a fiber base with the above-described aqueous urethane resin composition and subsequently performing thermal coagulation of the aqueous urethane resin composition.

The present invention further provides a method for producing a leather-like sheet, the method including impregnating a fiber base with the above-described aqueous urethane resin composition, and subsequently drying the resulting fiber base by heat in order to perform thermal coagulation of the aqueous urethane resin composition. Advantageous Effects of Invention

The aqueous urethane resin composition according to the present invention is a urethane resin composition with which a fiber base can be impregnated, which is capable of thermal coagulation, and which do not detach from the fiber base when the impregnated base is, for example, colored. The aqueous urethane resin composition according to the present invention is capable of forming a coating film having resistance to discoloration which may occur with time, flexibility, and an adequate degree of resilience due to rubber elasticity. Thus, the aqueous urethane resin composition according to the present invention may be suitably used as a material of leather-like sheets such as artificial leather and synthetic leather, coating agents, adhesives, or the like and particularly suitably used as a material of leather-like sheets.

Description of Embodiments

The aqueous urethane resin composition according to the present invention includes, as essential components, a urethane resin (A), a nonionic emulsifier (B), and an aqueous medium (C). The urethane resin (A) is produced by reacting a polyol (a1) including a polyol (a1-1) including a carboxyl group with an aromatic polyisocyanate (a2) and a chain extender (a3). The content of urea linkage in the urethane resin (A) is 0.3 mol/kg or less.

Examples of the polyol (a1-1) including a carboxyl group include 2,2'-dimethylolpropionic acid, 2,2'-dimethylolbutanoic acid, 2,2'-dimethylolbutyric acid, and 2,2'-valeric acid. The above compounds may be used alone or in combination of two or more.

Since the urethane resin (A) includes the polyol (a1-1) including a carboxyl group, the urethane resin (A) serves as an anionic urethane resin including a carboxyl group. If the polyol (a1-1) including a carboxyl group is not used as a raw material of the urethane resin (A), the urethane resin (A) may detach from the fiber base when a sheet produced by impregnating a fiber base with the aqueous urethane resin composition according to the present invention and subsequently performing thermal coagulation of the urethane resin composition is, for example, colored.

The amount of the polyol (a1-1) is preferably 0.05% to 10% by mass and is more preferably 0.1% to 7% by mass of the amount of the polyol (a1).

Examples of polyols other than the polyol (a1-1) which may be included in the polyol (a1) include polyether polyols, polyester polyols, polycarbonate polyols, dimer diols, acrylic polyols, and polybutadiene polyols. The above polyols may be used alone or in combination of two or more.

The number-average molecular weight of the polyol is preferably 500 to 8,000 and is more preferably 800 to 3,000 in order to enhance the thermal coagulation property of the urethane resin composition. The number-average molecular weight of the polyol is measured by gel permeation column chromatography (GPC) under the following conditions.

Measurement equipment: High-speed GPC system ("HLC-8220GPC" produced by Tosoh Corporation)

Columns: The following columns produced by Tosoh Corporation are connected in series.
"TSKgel G5000" (7.8 mm I.D. $\times$ 30 cm) $\times$ 1
"TSKgel G4000" (7.8 mm I.D. $\times$ 30 cm) $\times$ 1
"TSKgel G3000" (7.8 mm I.D. $\times$ 30 cm) $\times$ 1
"TSKgel G2000" (7.8 mm I.D. $\times$ 30 cm) $\times$ 1
Detector: RI (differential refractometer)
Column temperature: 40°C
Eluent: Tetrahydrofuran (THF)
Flow rate: 1.0 mL/min
Amount of injection: 100 $\mu$L (tetrahydrofuran solution, sample density: 0.4 mass%)
Reference samples: A calibration curve is prepared using the following standard polystyrenes.

(Standard Polystyrenes)

"TSKgel Standard Polystyrene A-500" produced by Tosoh Corporation
"TSKgel Standard Polystyrene A-1000" produced by Tosoh Corporation
"TSKgel Standard Polystyrene A-2500" produced by Tosoh Corporation
"TSKgel Standard Polystyrene A-5000" produced by Tosoh Corporation
"TSKgel Standard Polystyrene F-1" produced by Tosoh Corporation
"TSKgel Standard Polystyrene F-2" produced by Tosoh Corporation
"TSKgel Standard Polystyrene F-4" produced by Tosoh Corporation
"TSKgel Standard Polystyrene F-10" produced by Tosoh Corporation
"TSKgel Standard Polystyrene F-20" produced by Tosoh Corporation
"TSKgel Standard Polystyrene F-40" produced by Tosoh Corporation
"TSKgel Standard Polystyrene F-80" produced by Tosoh Corporation
"TSKgel Standard Polystyrene F-128" produced by Tosoh Corporation

"TSKgel Standard Polystyrene F-288" produced by Tosoh Corporation
"TSKgel Standard Polystyrene F-550" produced by Tosoh Corporation

The aromatic polyisocyanate (a2) is essential for forming a coating film having an excellent feeling (i.e., flexibility and resilience). If the aromatic polyisocyanate (a2) is replaced with another polyisocyanate, a paper-like coating film having poor resilience, that is, a coating film having a poor feeling, is formed. Examples of the aromatic polyisocyanate (a2) include phenylene diisocyanate, tolylene diisocyanate, diphenylmethane diisocyanate, naphthalene diisocyanate, polymethylene polyphenyl polyisocyanate, and carbodiimidized diphenylmethane polyisocyanate. The above aromatic polyisocyanates may be used alone or in combination of two or more. Among the above aromatic polyisocyanates, diphenylmethane diisocyanate is preferably used in order to further enhance the feeling of the coating film.

The aromatic polyisocyanate (a2) may be used in combination of other polyisocyanates as needed. Examples of the other polyisocyanates include aliphatic and alicyclic polyisocyanates, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate. The above polyisocyanates may be used alone or in combination of two or more.

The chain extender (a3) may be, for example, a chain extender including a hydroxyl group or a chain extender including an amino group. The above chain extenders may be used alone or in combination of two or more.

Examples of the chain extender including a hydroxyl group include aliphatic polyol compounds such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, and sorbitol; aromatic polyol compounds such as bisphenol A, 4,4'-dihydroxydiphenyl, 4,4'-dihydroxydiphenyl ether, 4,4'-dihydroxydiphenyl sulfone, hydrogenated bisphenol A, and hydroquinone; and water. The above chain extenders may be used alone or in combination of two or more. Among the above chain extenders, the aliphatic polyol compounds are preferably used from the viewpoints of the availability of raw materials and a reduction in the discoloration of the coating film which may occur with time.

Examples of the chain extender including an amino group include ethylenediamine, 1,2-propanediamine, 1,6-hexamethylenediamine, piperazine, 2-methylpiperazine, 2,5-dimethylpiperazine, isophoronediamine, 4,4'-dicyclohexylmethanediamine, 3,3'-dimethyl-4,4'-dicyclohexylmethanediamine, 1,2-cyclohexanediamine, 1,4-cyclohexanediamine, aminoethylethanolamine, hydrazine, diethylenetriamine, and triethylenetetramine. The above chain extenders may be used alone or in combination of two or more.

The amount of the chain extender (a3) used is preferably 0.5% to 20% by mass and is more preferably 1% to 10% by mass of total amount of the polyol (a1), the aromatic polyisocyanate (a2), and the chain extender (a3) in order to further enhance the durability of the coating film.

In the present invention, it is essential that the content of urea linkage in the urethane resin (A) be 0.3 mol/kg or less. If the content of urea linkage in the urethane resin (A) exceeds 0.3 mol/kg, the resulting coating film may become discolored with time or the feeling of the coating film may be degraded.

The urea linkage is formed when an amino group included in the chain extender (a3) and/or an amino group resulting from the reaction of an isocyanate group with water react with a polyisocyanate. Therefore, the content of urea linkage in the urethane resin (A) can be controlled by adjusting the amount of the chain extender including an amino group which is used as a chain extender (a3), and by urethanizing all isocyanates before emulsification is performed. The content of urea linkage is calculated using General Formula (1) below.

$$\text{Content of Urea Linkage (mol/kg)} = [(\text{Number of Moles of Amino Group}) + (\text{Number of Moles of Isocyanate Group} - \text{Number of Moles of Hydroxyl Group} - \text{Number of Moles of Amino Group})/2]/[\text{Mass of Polyol (a1)} + \text{Mass of Aromatic Polyisocyanate (a2)} + \text{Mass of Chain Extender (a3)}] \quad (1)$$

The urethane resin (A) is produced by, for example, a method in which the polyol (a1) is reacted with the aromatic polyisocyanate (a1) to form a urethane prepolymer including an isocyanate group and the urethane prepolymer is reacted with the chain extender (a3); or a method in which the polyol (a1), the aromatic polyisocyanate (a2), and the chain extender (a3) are mixed together and reacted with one another at a time. The above reactions are preferably conducted, for example, at 50°C to 100°C for 3 to 10 hours.

The molar ratio of the amount of isocyanate group included in the aromatic polyisocyanate (a2) to the total amount of hydroxyl group included in the polyol (a1) and hydroxyl group and/or amino group included in the chain extender (a3), that is, [(Isocyanate Group)/(Hydroxyl Group and/or Amino Group)], is preferably 0.8 to 1.2 and is more preferably 0.9 to 1.1.

In the production of the urethane resin (A), an isocyanate group remaining in the urethane resin (A) is preferably deactivated. For deactivating such an isocyanate group, an alcohol including one hydroxyl group, such as methanol, is preferably used. When such an alcohol is used, the amount of the alcohol used is preferably 0.001 to 10 parts by mass relative to 100 parts by mass of the urethane resin (A).

In the production of the urethane resin (A), an organic solvent may be used. Examples of the organic solvent include ketone compounds such as acetone and methyl ethyl ketone; ether compounds such as tetrahydrofuran and dioxane; ester compounds of acetic acid, such as ethyl acetate and butyl acetate; nitrile compounds such as acetonitrile; and amide compounds such as dimethylformamide and N-methylpyrrolidone. The above organic solvents may be used alone or in combination of two or more. The organic solvent is preferably removed by distillation or the like when the aqueous urethane resin composition is prepared.

The content of aromatic ring in the urethane resin (A) produced by the above-described method is preferably 0.3 to 5 mol/kg and is more preferably 0.3 to 3 mol/kg in order to further increase the mechanical strength of the resulting coating film, further reduce the discoloration of the coating film which may occur with time, and further reduce the likelihood of the urethane resin (A) detaching from the fiber base.

The nonionic emulsifier (B) is an essential component for enhancing the water-dispersion stability of the urethane resin (A), performing thermal coagulation of the urethane resin composition, and reducing the likelihood of the urethane resin (A) detaching from the fiber base. Examples of the nonionic emulsifier (B) include nonionic emulsifiers including an oxyethylene group, such as polyoxyethylene nonylphenyl ether, polyoxyethylene octylphenyl ether, polyoxyethylene distyrenated phenyl ether, polyoxyethylene lauryl ether, polyoxyethylene oleyl ether, polyoxyethylene stearyl ether, and polyoxyethylene sorbitol tetraoleate. The average number of moles of the oxyethylene group included in the nonionic emulsifier (B) is preferably 1 to 50, is more preferably 3 to 30, and is further preferably 5 to 20 in order to further enhance the thermal coagulation property of the urethane resin composition. The above nonionic emulsifiers may be used alone or in combination of two or more.

The amount of the nonionic emulsifier (B) used is preferably 0.1 to 30 parts by mass and is more preferably 1 to 10 parts by mass relative to 100 parts by mass of the urethane resin (A) in order to further enhance the water-dispersion stability of the urethane resin (A) and the thermal coagulation property of the urethane resin composition and reduce the likelihood of the urethane resin (A) detaching from the fiber base.

Examples of the aqueous medium (C) include water, organic solvents miscible with water, and a mixture of water and an organic solvent miscible with water. Examples of the organic solvents miscible with water include alcohol solvents such as methanol, ethanol, n-propanol, and isopropanol; ketone solvents such as acetone and methyl ethyl ketone; polyalkylene glycol solvents such as ethylene glycol, diethylene glycol, and propylene glycol; alkylether solvents of polyalkylene glycol; and lactam solvents such as N-methyl-2-pyrrolidone. The above aqueous media may be used alone or in combination of two or more. Among the above aqueous media, water only and a mixture of water and an organic solvent miscible with water are preferably used, and water only is more preferably used from the viewpoints of safety and a reduction in the environmental load.

The mass ratio [(A)/(C)] of the urethane resin (A) to the aqueous medium (C) is preferably 10/80 to 70/30 and is more preferably 20/80 to 60/40 in order to further enhance workability and the feeling of the coating film.

The aqueous urethane resin composition according to the present invention may optionally include a neutralizer and other additives in addition to the urethane resin (A), the nonionic emulsifier (B), and the aqueous medium (C) that are included as essential components.

The neutralizer is an agent used for neutralizing a carboxyl group included in the urethane resin (A). Examples of the neutralizer include nonvolatile bases such as sodium hydroxide and potassium hydroxide; and tertiary amines such as trimethylamine, triethylamine, dimethylethanolamine, methyldiethanolamine, and triethanol. The above neutralizers may be used alone or in combination of two or more.

The amount of the neutralizer used is preferably controlled such that the molar ratio of the neutralizer used to the carboxyl groups included in the urethane resin (A) is 0.8 to 1.2.

Examples of the other additives include a coagulant, a urethanization catalyst, a silane coupling agent, a filler, a thixotropy-imparting agent, a tackifier, a wax, a heat stabilizer, a light stabilizer, a fluorescent brightening agent, a blowing agent, a pigment, a dye, a conductivity-imparting agent, an antistatic agent, a moisture permeability improver, a water repellent, an oil repellent, a hollow foam, a flame retardant, a water absorbent, a desiccant, a deodorant, a foam stabilizer, an antiblocking agent, and an antihydrolysis agent. The above additives may be used alone or in combination of two or more. In the production of the leather-like sheet in which thermal coagulation of the aqueous urethane resin composition according to the present invention is performed, a coagulant (D) is preferably used among the above additives in order to enhance the thermal coagulation property of the urethane resin composition.

Examples of the coagulant (D) include inorganic salts, associative thickeners, and crosslinkers. The above coagulants may be used alone or in combination of two or more.

Examples of the inorganic salts include metal salts such as calcium nitrate, calcium chloride, zinc nitrate, zinc chloride, magnesium acetate, aluminium sulfate, and sodium chloride. The above inorganic salts may be used alone or in combination of two or more.

Examples of the associative thickeners include cellulose derivatives such as hydroxyethylcellulose, methylcellulose, and carboxymethylcellulose; salts of polyacrylic acid, polyvinylpyrrolidone, urethane compounds, and polyether compounds. The above thickeners may be used alone or in combination of two or more.

Examples of the crosslinkers include a carbodiimide crosslinker, an isocyanate crosslinker, an epoxy crosslinker, and a melamine crosslinker. The above crosslinkers may be used alone or in combination of two or more.

The amount of the coagulant (D) used is preferably 0.1 to 20 parts by mass and is more preferably 0.5 to 10 parts by mass relative to 100 parts by mass of the urethane resin (A) .

The aqueous urethane resin composition according to the present invention may be particularly suitably used for producing a leather-like sheet including an impregnated base prepared by impregnating a fiber base with a resin. The leather-like sheet may be an impregnated base prepared by impregnating a fiber base with a resin, that is, "suede" leather-like sheet. In another case, the leather-like sheet may be produced by forming an intermediate layer including a porous layer on the surface of the impregnated base as needed, and forming a surface coating layer on the intermediate layer, the impregnated base being formed by impregnating a fiber base with a resin and performing thermal coagulation of the resin. Thus, the aqueous urethane resin composition according to the present invention may be suitably used as a resin composition with which the fiber base is impregnated.

Examples of the fiber base include nonwoven fabric, woven fabric, and knitted fabric. Examples of a material of the fiber base include polyester fiber, nylon fiber, acrylic fiber, polyurethane fiber, acetate fiber, rayon fiber, polylactic acid fiber, cotton, hemp, silk, wool, and blendings of these fibers.

For impregnating the fiber base with the aqueous urethane resin composition, for example, the fiber base is directly dipped into a tank containing the aqueous urethane resin composition, and excess is subsequently squeezed out using a mangle or the like.

The fiber base impregnated with the aqueous urethane resin composition is subsequently dried by heat or steam at a temperature (e.g., 50°C to 80°C) equal to or higher than the thermal coagulation temperature of the urethane resin (A) in order to perform coagulation of the urethane resin (A) and evaporate the aqueous medium (B) included in the aqueous urethane resin composition. Thus, a base that is a fiber base impregnated with the urethane resin (A) can be produced. This impregnated base may be suitably used for producing a leather-like sheet having excellent flex resistance.

While heat drying and steam drying may be employed as described above for drying the urethane resin (A) at a temperature equal to or higher than the thermal coagulation temperature of the urethane resin (A), it is known that, in general, a coating film having a better feeling can be produced by steam drying. However, steam drying requires large-scale facilities. On the other hand, when the aqueous urethane resin composition according to the present invention is used, it is possible to form a coating film having an excellent feeling comparable to that of a coating film formed by steam drying even when heat drying is employed, which is a versatile method that does not require such facilities.

The leather-like sheet produced by the above-described method may be used as, for example, a material of shoes, bags, or clothing; a member of furniture such as a chair or a sofa; an automotive interior material such as a material of a seat or a handle; a breathable-waterproof material; a leather-like sheet such as synthetic leather or artificial leather; a polishing material; a back pad; or a core of felt-tipped pens.

Since the aqueous urethane resin composition according to the present invention is capable of forming a coating film having an excellent feeling, the aqueous urethane resin composition may also be used as, for example, an agent for coating the surfaces of various types of bases.

Examples of the bases include fiber bases composed of woven fabric, nonwoven fabric, or the like; leather-like sheets; plated steel sheets such as a galvanized steel sheet and an aluminium-zinc-alloy plated steel sheet; metal bases such as an aluminium sheet, an aluminium alloy sheet, a magnetic steel sheet, a copper sheet, and a stainless steel sheet; plastic bases such as a polycarbonate base, a polyester base, an acrylonitrile-butadiene-styrene base, a polyacrylic base, a polystyrene base, a polyurethane base, an epoxy resin base, a polyvinyl chloride base, and a polyamide base; and a glass base. Among the above bases, leather-like sheets such as synthetic leather and artificial leather, which are used as a material of shoes and bags, are preferably used, because it is possible to produce leather-like sheets having an excellent appearance with efficiency by bonding another member onto the surface of the leather-like sheet with an adhesive or by applying putty or the like onto the surface of the leather-like sheet.

It is possible to form a coating film with the aqueous urethane resin composition according to the present invention by applying the aqueous urethane resin composition directly onto the surface of the base and drying the resulting coating film to perform curing. It is also possible to form a coating film by applying the aqueous urethane resin composition according to the present invention onto the surface of a releasing paper, drying and curing the resulting coating film, and subsequently stacking the base on the surface of the releasing paper on which the coating film has been deposited. In the case where a crosslinker is used as a coagulant (D), it is preferable to mix the crosslinker with the urethane resin (A) immediately before the aqueous urethane resin composition is applied onto the surface of the base in order to maintain ease of coating.

For applying the aqueous urethane resin composition to the base, for example, spraying, curtain coating, flow coating, roll coating, brush coating, and dipping may be employed.

For drying and curing the coating film, the coating film may be maintained at ordinary temperature for about 1 to 10 days. In order to cure the coating film quickly, it is preferable to heat the coating film at 50°C to 250°C for about 1 to 600 seconds. In the case where a plastic base is used, which is likely to become deformed or discolored at a relatively high temperature, it is preferable to maintain the coating film at a relatively low temperature of, for example, 30°C to 100°C.

The thickness of the coating film, which is formed using the urethane resin composition according to the present invention, can be controlled appropriately depending on the application or the like of the base and is preferably, for example, 0.5 to 100 $\mu$m.

EXAMPLES

[Example 1] Preparation of Aqueous Urethane Resin Composition (X-1)

In the presence of 3,281 parts by mass of methyl ethyl ketone and 0.1 parts by mass of stannous octoate, 1,000 parts by mass of polycarbonate polyol ("NIPPOLLAN 980R" produced by Nippon Polyurethane Industry Co., Ltd., number-average molecular weight; 2,000) was reacted with 17 parts by mass of 2,2'-dimethylolpropionic acid, 47 parts by mass of ethylene glycol, and 344 parts by mass of diphenylmethane diisocyanate at 70°C until the viscosity of the reaction solution reached 20,000 mPa·s. Subsequently, 3 parts by mass of methanol was added to the reaction solution in order to stop the reaction. Thus, a methyl ethyl ketone solution of a urethane resin (A-1) was prepared. The solution of a urethane resin was mixed with 70 parts by mass of polyoxyethylene distyrenated phenyl ether (hydrophile-lipophile balance [hereinafter, abbreviated as "HLB"]; 14, average number of moles of oxyethylene group included; 10, hereinafter, abbreviated as "(B-1)"), which served as a nonionic emulsifier (B), and 13 parts by mass of triethylamine. To the resulting mixture, 800 parts by mass of ion-exchange water was added in order to perform phase inversion emulsification. Thus, an emulsion containing the urethane resin (A-1) dispersed in water was prepared.

Subsequently, methyl ethyl ketone was distilled away from the emulsion to prepare an aqueous urethane resin composition (X-1) having a nonvolatile content of 40% by mass.

[Example 2] Preparation of Aqueous Urethane Resin Composition (X-2)

In the presence of 3,281 parts by mass of methyl ethyl ketone and 0.1 parts by mass of stannous octoate, 1,000 parts by mass of polyether polyol ("PTMG2000" produced by Mitsubishi Chemical Corporation, number-average molecular weight; 2,000) was reacted with 17 parts by mass of 2,2'-dimethylolpropionic acid, 47 parts by mass of ethylene glycol, and 344 parts by mass of diphenylmethane diisocyanate at 70°C until the viscosity of the reaction solution reached 20,000 mPa·s. Subsequently, 3 parts by mass of methanol was added to the reaction solution in order to stop the reaction. Thus, a methyl ethyl ketone solution of a urethane resin (A-2) was prepared. The solution of a urethane resin was mixed with 70 parts by mass of (B-1) and 13 parts by mass of triethylamine. To the resulting mixture, 800 parts by mass of ion-exchange water was added in order to perform phase inversion emulsification. Thus, an emulsion containing the urethane resin (A-2) dispersed in water was prepared.

Subsequently, methyl ethyl ketone was distilled away from the emulsion to prepare an aqueous urethane resin composition (X-2) having a nonvolatile content of 40% by mass.

[Example 3] Preparation of Aqueous Urethane Resin Composition (X-3)

In the presence of 3,281 parts by mass of methyl ethyl ketone and 0.1 parts by mass of stannous octoate, 1,000 parts by mass of polyester polyol ("PLACCEL 220" produced by Daicel Corporation, number-average molecular weight; 2,000) was reacted with 17 parts by mass of 2,2'-dimethylolpropionic acid, 47 parts by mass of ethylene glycol, and 344 parts by mass of diphenylmethane diisocyanate at 70°C until the viscosity of the reaction solution reached 20,000 mPa·s. Subsequently, 3 parts by mass of methanol was added to the reaction solution in order to stop the reaction. Thus, a methyl ethyl ketone solution of a urethane resin (A-3) was prepared. The solution of a urethane resin was mixed with 70 parts by mass of (B-1) and 13 parts by mass of triethylamine. To the resulting mixture, 800 parts by mass of ion-exchange water was added in order to perform phase inversion emulsification. Thus, an emulsion containing the urethane resin (A-3) dispersed in water was prepared.

Subsequently, methyl ethyl ketone was distilled away from the emulsion to prepare an aqueous urethane resin composition (X-3) having a nonvolatile content of 40% by mass.

[Comparative Example 1] Preparation of Aqueous Urethane Resin Composition (X'-1)

In the presence of 3,723 parts by mass of methyl ethyl ketone and 0.1 parts by mass of stannous octoate, 1,000 parts by mass of polyether polyol ("PTMG2000" produced by Mitsubishi Chemical Corporation, number-average molecular weight; 2,000), 130 parts by mass of "UNILUBE 75DE-60" (produced by NOF CORPORATION, polyoxyethylene polyoxypropylene glycol having a number-average molecular weight of 3,000), and 50 parts by mass of "UNILUBE 75MB-900" (produced by NOF CORPORATION, polyoxyethylene polyoxypropylene glycol monobutyl ether having a number-average molecular weight of 3,400) were reacted with 57 parts by mass of ethylene glycol and 360 parts by mass of diphenylmethane diisocyanate at 70°C until the viscosity of the reaction solution reached 20,000 mPa·s. Subsequently, 3 parts by mass of methanol was added to the reaction solution in order to stop the reaction. Thus, a methyl ethyl ketone solution of a urethane resin (A'-1) was prepared. The solution of a urethane resin was mixed with 79 parts by mass of (B-1). To the resulting mixture, 8,000 parts by mass of ion-exchange water was added in order to perform phase inversion emulsification. Thus, an emulsion containing the urethane resin (A'-1) dispersed in water was prepared.
Subsequently, methyl ethyl ketone was distilled away from the emulsion to prepare an aqueous urethane resin composition (X'-1) having a nonvolatile content of 40% by mass.

[Comparative Example 2] Preparation of Aqueous Urethane Resin Composition (X'-2)

In the presence of 3,505 parts by mass of methyl ethyl ketone and 0.1 parts by mass of stannous octoate, 1,000 parts by mass of polycarbonate polyol ("NIPPOLLAN 980R" produced by Nippon Polyurethane Industry Co., Ltd., number-average molecular weight; 2,000) was reacted with 50 parts by mass of 2,2'-dimethylolpropionic acid, 47 parts by mass of ethylene glycol, and 407 parts by mass of diphenylmethane diisocyanate at 70°C until the viscosity of the reaction solution reached 20,000 mPa·s. Subsequently, 3 parts by mass of methanol was added to the reaction solution in order to stop the reaction. Thus, a methyl ethyl ketone solution of a urethane resin (A'-2) was prepared. The solution of a urethane resin was mixed with 38 parts by mass of triethylamine. To the resulting mixture, 800 parts by mass of ion-exchange water was added in order to perform phase inversion emulsification. Thus, an emulsion containing the urethane resin (A'-2) dispersed in water was prepared.
Subsequently, methyl ethyl ketone was distilled away from the emulsion to prepare an aqueous urethane resin composition (X'-2) having a nonvolatile content of 40% by mass.

[Comparative Example 3] Preparation of Aqueous Urethane Resin Composition (X'-3)

In the presence of 3,749 parts by mass of methyl ethyl ketone and 0.1 parts by mass of stannous octoate, 1,000 parts by mass of polycarbonate polyol ("NIPPOLLAN 980R" produced by Nippon Polyurethane Industry Co., Ltd., number-average molecular weight; 2,000) and 180 parts by mass of "UNILUBE 75MB-900" (produced by NOF CORPORATION, polyoxyethylene polyoxypropylene glycol monobutyl ether having a number-average molecular weight of 3,400) were reacted with 18 parts by mass of 2,2'-dimethylolpropionic acid, 49 parts by mass of ethylene glycol, and 362 parts by mass of diphenylmethane diisocyanate at 70°C until the viscosity of the reaction solution reached 20,000 mPa·s. Subsequently, 3 parts by mass of methanol was added to the reaction solution in order to stop the reaction. Thus, a methyl ethyl ketone solution of a urethane resin (A'-3) was prepared. The solution of a urethane resin was mixed with 13 parts by mass of triethylamine. To the resulting mixture, 800 parts by mass of ion-exchange water was added in order to perform phase inversion emulsification. Thus, an emulsion containing the urethane resin (A'-3) dispersed in water was prepared.
Subsequently, methyl ethyl ketone was distilled away from the emulsion to prepare an aqueous urethane resin composition (X'-3) having a nonvolatile content of 40% by mass.

[Comparative Example 4] Preparation of Aqueous Urethane Resin Composition (X'-4)

In the presence of 3,320 parts by mass of methyl ethyl ketone and 0.1 parts by mass of stannous octoate, 1,000 parts by mass of polycarbonate polyol ("NIPPOLLAN 980R" produced by Nippon Polyurethane Industry Co., Ltd., number-average molecular weight; 2,000) was reacted with 17 parts by mass of 2,2'-dimethylolpropionic acid, 47 parts by mass of ethylene glycol, and 407 parts by mass of dicyclohexylmethane diisocyanate at 70°C until the viscosity of the reaction solution reached 20,000 mPa·s. Subsequently, 3 parts by mass of methanol was added to the reaction solution in order to stop the reaction. Thus, a methyl ethyl ketone solution of a urethane resin (A'-4) was prepared. The solution of a urethane resin was mixed with 70 parts by mass of (B-1) and 13 parts by mass of triethylamine. To the resulting mixture, 800 parts by mass of ion-exchange water was added in order to perform phase inversion emulsification. Thus, an emulsion containing the urethane resin (A'-4) dispersed in water was prepared.
Subsequently, methyl ethyl ketone was distilled away from the emulsion to prepare an aqueous urethane resin composition (X'-4) having a nonvolatile content of 40% by mass.

[Comparative Example 5] Preparation of Aqueous Urethane Resin Composition (X'-5)

In the presence of 2,902 parts by mass of methyl ethyl ketone and 0.1 parts by mass of stannous octoate, 1,000 parts by mass of polycarbonate polyol ("NIPPOLLAN 980R" produced by Nippon Polyurethane Industry Co., Ltd., number-average molecular weight; 2,000) was reacted with 17 parts by mass of 2,2'-dimethylolpropionic acid, 12 parts by mass of ethylenediamine, and 216 parts by mass of diphenylmethane diisocyanate at 70°C until the viscosity of the reaction solution reached 20,000 mPa·s. Subsequently, 3 parts by mass of methanol was added to the reaction solution in order to stop the reaction. Thus, a methyl ethyl ketone solution of a urethane resin (A'-5) was prepared. The solution of a urethane resin was mixed with 62 parts by mass of (B-1) and 13 parts by mass of triethylamine. To the resulting mixture, 800 parts by mass of ion-exchange water was added in order to perform phase inversion emulsification. Thus, an emulsion containing the urethane resin (A'-5) dispersed in water was prepared.

Subsequently, methyl ethyl ketone was distilled away from the emulsion to prepare an aqueous urethane resin composition (X'-5) having a nonvolatile content of 40% by mass.

[Method for Evaluating Water-Dispersion Stability]

An evaluation of "T" was given when the urethane resin was able to be dispersed in the aqueous medium to form an aqueous urethane resin composition by the method described in Examples and Comparative examples. An evaluation of "F" was given when the urethane resin was not able to be dispersed in the aqueous medium and settled or gelated.

[Method for Preparing Impregnated Base]

With 100 parts by mass of a 2-mass% aqueous sodium chloride solution, 100 parts by mass of each of the aqueous urethane resin compositions prepared in Examples and Comparative Examples was mixed, and the resulting mixture was stirred with a mechanical mixer at 2,000 rpm for 2 minutes in order to prepare an aqueous urethane resin composition for impregnation.

Nonwoven fabric sheets composed of polyester fiber having a basis weight of 300 g/m$^2$ (thickness: 1.5 mm) were each dipped into a tank containing a specific one of the aqueous urethane resin compositions for impregnation. The resulting nonwoven fabric sheets were wrung with a mangle equipped with a rubber roller. Thus, products impregnated with the respective aqueous urethane resin compositions were prepared. The mass of the aqueous urethane resin composition included in each product was equal to the mass of the nonwoven fabric sheet used. The impregnated products were dried at 100°C for 10 minutes with a gear hot-air drying machine. Thus, leather-like sheets including an impregnated base, which was prepared by impregnating nonwoven fabric with a urethane resin, were prepared.

Note that, in the case where the aqueous urethane resin composition was coagulated at ordinary temperature after being mixed with the 2-mass% aqueous sodium chloride solution, the following evaluations were omitted and an evaluation of "-" was given.

[Occurrence of Detachment of Urethane Resin from Leather-Like Sheet in Coloring Step]

In the evaluation of occurrence of detachment of the urethane resin from the leather-like sheet in the coloring step, a surrogate test in which water containing no dye was used as a coloring liquid was conducted. This evaluation method can be employed as a substitute for a method for evaluating detachment of the urethane resin in the coloring step, because the detachment of the urethane resin is caused due to water and water temperature.

In this testing method, the mass of each leather-like sheet including the impregnated base was measured. Subsequently, the leather-like sheet was immersed in water at 25°C and, while stirring was performed at 60 rpm, the temperature was increased to 130°C at 1 °C/min. After the leather-like sheet was maintained at 130°C for 30 minutes, the temperature was reduced to 25°C at 1 °C/min.

After cooling was completed, the surface of the impregnated base was washed with water and subsequently dried at 120°C for 5 minutes with a gear hot-air drying machine. The mass of the dried leather-like sheet was measured.

The proportion of urethane resin that detached from the leather-like sheet was calculated from the measured values using the following formula. Formula; 100 × [Mass of Dried Leather-Like Sheet/Initial Mass of Leather-Like Sheet]

[Thermal Coagulation Property (Method for Measuring Thermal Coagulation Temperature)]

Adjustment was made such that each of the aqueous urethane resin compositions prepared by the above-described method had a nonvolatile content of 20% by mass. Subsequently, the viscosity of each of the resulting aqueous urethane resin compositions was measured with a viscosity-viscoelasticity measurement system ("Reo Stress" produced by HAAKE) while heating was performed at 1 °C/min. The temperature at which the viscosity of each aqueous urethane resin composition exceeded 100 mPa·s was considered to be the coagulation temperature (°C) of the aqueous urethane resin composition.

[Method for Evaluating Feeling of Leather-Like Sheet]

The feeling of each of the fiber multilayer bodies prepared by the above-described method was evaluated in terms of flexibility and resilience by touching the fiber multilayer body.

(Evaluation of Flexibility)

T: Flexible F: Hard

(Evaluation of Resilience)

T: Resilient F: Paper-like, not resilient

[Method for Evaluating Discoloration]

The color of the exterior of each of the fiber multilayer bodies prepared by the above-described method was visually inspected and evaluated subjectively.

T: White (no discoloration) F: Yellow

[Table 1]

| Table 1 | Example 1 | Example 2 | Example 3 |
|---|---|---|---|
| Aqueous urethane resin composition | X-1 | X-2 | X-3 |
| Urethane resin (A) | | | |
| Polyol (a1) | | | |
| Polyol including carboxyl group (a1-1) | DMPA | DMPA | DMPA |
| Other polyols | PC | PEt | PEs |
| Aromatic polyisocyanate (a2) | MDI | MDI | MDI |
| Chain extender (a3) | EG | EG | EG |
| Content of urea linkages in urethane resin (A) (mol/kg) | 0 | 0 | 0 |
| Content of aromatic rings in urethane resin (A) (mol/kg) | 1.95 | 1.95 | 1.95 |
| Nonionic emulsifier (B) | B-1 | B-1 | B-1 |
| Aqueous medium (C) | Ion-exchange water | Ion-exchange water | Ion-exchange water |
| Coagulant (D) | Nacl | Nacl | Nacl |
| Water-dispersion stability | T | T | T |
| Thermal coagulation temperature (°C) | 45 | 46 | 44 |
| Proportion of urethane resin lost (mass%) | 0.2 | 0.3 | 0.3 |

(continued)

| Table 1 | | Example 1 | Example 2 | Example 3 |
|---|---|---|---|---|
| Feeling | Flexibility | T | T | T |
| | Resilience | T | T | T |
| Discoloration | | T | T | T |

[Table 2]

| Table 2 | Comparative example 1 | Comparative example 2 | Comparative example 3 | Comparative example 4 | Comparative example 5 |
|---|---|---|---|---|---|
| Aqueous urethane resin composition | X'-1 | X'-2 | X'-3 | X'-4 | X'-5 |
| Urethane resin (A) | | | | | |
| Polyol (a1) | | | | | |
| Polyol including carboxyl group (a1-1) | | DMPA | DMPA | DMPA | DMPA |
| Other polyols | PC | PC | PC | PC | PC |
| | UNILUBE 75DE-60 | | UNILUBE 75MB-900 | | |
| | UNILUBE 75MB-900 | | | | |
| Aromatic polyisocyanate (a2) | MDI | MDI | MDI | | MDI |
| Other polyisocyanates | | | | H12MDI | |
| Chain extender (a3) | EG | EG | EG | EG | EDA |
| Content of urea linkages in urethane resin (A) (mol/kg) | 0 | 0 | 0 | 0 | 0.32 |
| Content of aromatic rings in urethane resin (A) (mol/kg) | 1.80 | 2.16 | 1.80 | 0 | 1.39 |
| Nonionic emulsifier (B) | B-1 | | | B-1 | B-1 |
| Aqueous medium (C) | Ion-exchange water | Ion-exchange water | Ion-exchange water | Ion-exchange water | Ion-exchange water |
| Coagulant (D) | NaCl | NaCl | NaCl | NaCl | NaCl |
| Water-dispersion stability | T | T | T | T | T |
| Thermal coagulation temperature (°C) | 50 | - | 60 | 45 | 45 |
| Proportion of urethane resin lost (mass%) | 2 | - | 5 | 0.3 | 0.3 |
| Feeling          Flexibility | T | - | T | T | T |
| Resilience | T | - | T | F | F |
| Discoloration | T | - | T | T | F |

The following abbreviations are used in Tables 1 and 2.

"DMPA"; 2,2'-Dimethylolpropionic acid
"PC"; Polycarbonate polyol
"PEt"; Polyether polyol
"PEs"; Polyester polyol
"EG"; Ethylene glycol
"MDI"; Diphenylmethane diisocyanate
"B-1"; Polyoxyethylene distyrenated phenyl ether
"$H_{12}$MDI"; Dicyclohexylmethane diisocyanate
"EDA"; Ethylenediamine
"NaCl"; Sodium chloride

The aqueous urethane resin compositions prepared in Examples 1 to 3, which were the aqueous urethane resin compositions according to the present invention, had excellent water-dispersion stability and an excellent thermal coagulation property and hardly detached from the fiber base. Furthermore, the coating films prepared using the aqueous urethane resin compositions prepared in Examples 1 to 3 did not become discolored and had an excellent feeling, that is, flexibility and resilience.

On the other hand, the aqueous urethane resin composition prepared in Comparative Example 1, which included, as a urethane resin (A), a nonionic urethane resin prepared without using the polyol (a1-1) including a carboxyl group, significantly detached from the fiber base.

The aqueous urethane resin composition prepared in Comparative Example 2, which did not include the nonionic emulsifier (B), was coagulated at ordinary temperature after being mixed with the coagulant (D). Therefore, it was not possible to perform thermal coagulation of the urethane resin composition.

The aqueous urethane resin composition prepared in Comparative Example 3, which was prepared as in Comparative Example 2 except that the type of urethane resin (A) used was changed, significantly detached from the fiber base.

The aqueous urethane resin composition prepared in Comparative Example 4, which was prepared using dicyclohexylmethane diisocyanate instead of the aromatic polyisocyanate (a3), formed a paper-like coating film having a poor feeling.

The aqueous urethane resin composition prepared in Comparative Example 5, in which the content of urea linkage in the urethane resin exceeded the limit specified in the present invention, formed a paper-like coating film having a poor feeling. In addition, discoloration of the coating film was severe.

## Claims

1. A leather-like sheet produced by impregnating a fiber base with an aqueous urethane resin composition and subsequently performing thermal coagulation of the aqueous urethane resin composition, the aqueous urethane resin composition including a urethane resin (A), a nonionic emulsifier (B), and an aqueous medium (C), the urethane resin (A) being produced by reacting a polyol (a1) including a polyol (a1-1) including a carboxyl group with an aromatic polyisocyanate (a2) and a chain extender (a3), the content of urea linkage in the urethane resin (A) being 0.3 mol/kg or less.

2. The leather-like sheet according to Claim 1, wherein the content of aromatic ring in the urethane resin (A) is 0.3 to 5 mol/kg.

3. The leather-like sheet according to Claim 1, wherein the aromatic polyisocyanate (a2) is diphenylmethane diisocyanate or toluene diisocyanate.

4. The leather-like sheet according to Claim 1, wherein the polyol (a1) includes at least one polyol selected from the group consisting of a polyether polyol, a polyester polyol, and a polycarbonate polyol.

5. The leather-like sheet according to Claim 1, wherein the polyol (a1-1) including a carboxyl group is 2,2'-dimethylolpropionic acid, 2,2'-dimethylolbutanoic acid, or 2,2'-dimethylolbutyric acid.

6. The leather-like sheet according to Claim 1, wherein the chain extender (a3) is ethylene glycol or 1,4-butanediol.

7. The leather-like sheet according to Claim 1, wherein the nonionic emulsifier (B) includes an oxyethylene group, the average number of moles of the oxyethylene group included in the nonionic emulsifier (B) being 1 to 50.

8. The leather-like sheet according to Claim 1, wherein the amount of the nonionic emulsifier (B) used is 0.1 to 30 parts by mass relative to 100 parts by mass of the urethane resin (A).

9. The leather-like sheet according to Claim 1, wherein the amount of the polyol (a1-1) including a carboxyl group is 0.05% to 10% by mass of the amount of the polyol (a1).

10. The leather-like sheet according to Claim 1, wherein the amount of the chain extender (a3) used is 0.5% to 20% by mass of the total amount of the polyol (a1), the aromatic polyisocyanate (a2), and the chain extender (a3).

**Patentansprüche**

1. Lederartige Folie, hergestellt durch Imprägnieren einer Faserbasis mit einer wässrigen Urethanharzzusammensetzung, und nachfolgend Ausführen thermischer Koagulation der wässrigen Urethanharzzusammensetzung, wobei die wässrige Urethanharzzusammensetzung Folgendes umfasst: ein Urethanharz (A), einen nichtionischen Emulgator (B), sowie ein wässriges Medium (C), wobei das Urethanharz (A) hergestellt wird durch Umsetzen eines Polyols (a1), umfassend ein Polyol (a1-1), umfassend eine Carboxylgruppe, mit einem aromatischen Polyisocyanat (a2) und einem Kettenverlängerer (a3), wobei der Gehalt an Harnstoffverknüpfung in dem Urethanharz (A) 0,3 mol/kg oder weniger beträgt.

2. Lederartige Folie gemäß Anspruch 1, wobei der Gehalt an aromatischen Ringen in dem Urethanharz (A) 0,3 bis 5 mol/kg beträgt.

3. Lederartige Folie gemäß Anspruch 1, wobei das aromatische Polyisocyanat (a2) Diphenylmethandiisocyanat oder Toluoldiisocyanat ist.

4. Lederartige Folie gemäß Anspruch 1, wobei das Polyol (a1) wenigstens ein Polyol umfasst, ausgewählt aus der Gruppe, bestehend aus einem Polyetherpolyol, einem Polyesterpolyol und einem Polycarbonatpolyol.

5. Lederartige Folie gemäß Anspruch 1, wobei das eine Carboxylgruppe umfassende Polyol (a1-1) 2,2'-Dimethylolpropionsäure, 2,2'-Dimethylolbutansäure oder 2,2'-Dimethylolbuttersäure ist.

6. Lederartige Folie gemäß Anspruch 1, wobei der Kettenverlängerer (a3) Ethylenglycol oder 1,4-Butandiol ist.

7. Lederartige Folie gemäß Anspruch 1, wobei der nichtionische Emulgator (B) eine Oxyethylengruppe umfasst, wobei die durchschnittliche Molanzahl der in dem nichtionischen Emulgator (B) enthaltenen Oxyethylengruppe 1 bis 50 beträgt.

8. Lederartige Folie gemäß Anspruch 1, wobei die Menge an verwendetem nichtionischem Emulgator (B) 0,1 bis 30 Massenteile in Bezug auf 100 Massenteile des Urethanharzes (A) beträgt.

9. Lederartige Folie gemäß Anspruch 1, wobei die Menge des eine Carboxylgruppe umfassenden Polyols (a1-1) 0,05% bis 10% nach Masse der Menge an Polyol (a1) beträgt.

10. Lederartige Folie gemäß Anspruch 1, wobei die Menge des verwendeten Kettenverlängerers (a3) 0,5% bis 20% nach Masse der Gesamtmenge des Polyols (a1), des aromatischen Polyisocyanats (a2) und des Kettenverlängerers (a3) beträgt.

**Revendications**

1. Feuille de type cuir produite en imprégnant une base de fibre avec une composition aqueuse de résine d'uréthane et réalisation ultérieure d'une coagulation thermique de la composition aqueuse de résine d'uréthane, la composition aqueuse de résine d'uréthane incluant une résine d'uréthane (A), un émulsifiant non ionique (B), et un milieu aqueux (C), la résine d'uréthane (A) étant produite en faisant réagir un polyol (a1) incluant un polyol (a1-1) incluant un groupe carboxyle avec un polyisocyanate aromatique (a2) et un allongeur de chaîne (a3), la teneur en groupement urée dans la résine d'uréthane (A) étant de 0,3 mole/kg ou moins.

**2.** Feuille de type cuir selon la revendication 1, dans laquelle la teneur en cycle aromatique dans la résine d'uréthane (A) est de 0,3 à 5 moles/kg.

**3.** Feuille de type cuir selon la revendication 1, dans laquelle le polyisocyanate aromatique (a2) est le diisocyanate de diphénylméthane ou le diisocyanate de toluène.

**4.** Feuille de type cuir selon la revendication 1, dans laquelle le polyol (a1) inclut au moins un polyol choisi dans le groupe consistant en un polyéther polyol, un polyester polyol, et un polycarbonate polyol.

**5.** Feuille de type cuir selon la revendication 1, dans laquelle le polyol (a1-1) incluant un groupe carboxyle est l'acide 2,2'-diméthylolpropionique, l'acide 2,2'-diméthylolbutanoïque, ou l'acide 2,2'-diméthylolbutyrique.

**6.** Feuille de type cuir selon la revendication 1, dans laquelle l'allongeur de chaîne (a3) est l'éthylène glycol ou le 1,4-butanediol.

**7.** Feuille de type cuir selon la revendication 1, dans laquelle l'émulsifiant non ionique (B) inclut un groupe oxyéthylène, le nombre moyen de moles du groupe oxyéthylène inclus dans l'émulsifiant non ionique (B) étant de 1 à 50.

**8.** Feuille de type cuir selon la revendication 1, dans laquelle la quantité de l'émulsifiant non ionique (B) utilisée est de 0,1 à 30 parties en masse rapportée à 100 parties en masse de la résine d'uréthane (A).

**9.** Feuille de type cuir selon la revendication 1, dans laquelle la quantité du polyol (a1-1) incluant un groupe carboxyle est de 0,05 % à 10 % en masse de la quantité du polyol (a1).

**10.** Feuille de type cuir selon la revendication 1, dans laquelle la quantité de l'allongeur de chaîne (a3) utilisée est de 0,5 % à 20 % en masse de la quantité totale du polyol (a1), du polyisocyanate aromatique (a2), et de l'allongeur de chaîne (a3).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11335975 A
- JP 2004143641 A
- JP 2000096457 A